# EUROPÄISCHE PATENTSCHRIFT

(11) **EP 0 846 412 B1**
(45) Veröffentlichungstag und Bekanntmachung des Hinweises auf die Patenterteilung: **07.11.2001**
(21) Anmeldenummer: 97121147.9
(22) Anmeldetag: 02.12.1997
(51) Int. Cl.: A01F 29/20

(54) **Häckseltrommel**
Chaff-cutter drum
Rotor hacheur

(30) Priorität: 03.12.1996 DE 19650058
(43) Veröffentlichungstag der Anmeldung: 10.06.1998
(73) Patentinhaber: DEERE & COMPANY, Moline, Illinois 61265-8098 (US)
(72) Erfinder: Leeb, Georg, 81245 München (DE)
(74) Vertreter: Magin, Ludwig Bernhard

(56) Entgegenhaltungen:
- DE-A- 2 324 996
- US-A- 1 550 592
- US-A- 4 011 998
- US-A- 4 061 284
- DATABASE WPI Section PQ, Week 9251 Derwent Publications Ltd., London, GB; Class P12, AN 92-422710 XP002056053 & SU 1 709 954 A (TRANSP EQUIP CONSTR BUR) , 7.Februar 1992

## Beschreibung

Die Erfindung betrifft eine Häckseltrommel mit einer geschlossenen Trommel, mit auf die Trommel aufgesetzten Messerhaltern und mit Messern, wobei die Messerhalter einen das Messer tragenden ersten Schenkel und einen sich von der Trommel bis unter das Messer erstreckenden zweiten Schenkel aufweisen.

Die US-PS-4,061,284 offenbart einen Feldhäcksler mit einer Häckseltrommel in geschlossener Bauweise, d. h. mit einer auf ihrem Umfang geschlossenen Trommel, auf die zweischenklige Messerböcke aufgeschweißt sind, um annähernd tangential verlaufende Messer zu halten. Der sich zwischen den Messern und der Trommel erstreckende Schenkel dient als Prall- und Leitfläche für das von den Messern abgetrennte Gut. Dieses Gut wird durch die Prallflächen mitgenommen und beschleunigt und verläßt die Häckseltrommel tangential, sobald ein Austrittsschacht erreicht ist.

Das der Erfindung zugrunde liegende Problem wird darin gesehen, daß die Prallflächen nach hohen Durchsätzen Verschleiß aufzeigen und nasses, abzuwerfendes Gut an den Prallflächen anbackt.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird das Gut von den zweiten Schenkeln abgehalten und führt dort nicht zu Verschleiß. Vielmehr wird das Gut während der Bewegung zu dem zweiten Schenkel umgelenkt und verläßt den Umfangsbereich der Häckseltrommel in der gewünschten Richtung. Als besonders vorteilhaft hat sich herausgestellt, daß in dem Bereich zwischen zwei aufeinanderfolgenden Messern keine Wirbel mehr entstehen, die auch das die Häckseltrommel umgebende Gehäuse in Mitleidenschaft ziehen. Die Ausbildung eines separaten Schaufelteils, der mit dem Messer befestigt wird, und zwar darunter oder darauf, ermöglicht es, diesen bei Verschleiß oder Beschädigung auszutauschen. Es ist ferner möglich, für jeweilige Erntegüter, z. B. Mais oder Gras entsprechend ausgebildete Schaufelteile zu verwenden.

Derartige Schaufelteile sind in Aufbau, Anordnung und Wirkung nicht vergleichbar mit solchen, die im Stand der Technik bereits enthalten sind.

So sind bei einer Häckseltrommel nach der US-PS-2,476,177 die Messer selbst gekrümmt und verlaufen geneigt zu der Drehachse des Rotors. Diese Vorrichtung bedingt somit eine ganz spezielle Messerform, die hohe Herstellungskosten verursacht und zusätzlichem Verschleiß unterliegt.

Eine aus der US-PS-4,011,998 bekannte Häckseltrommel ist in offener Bauweise ausgeführt und weist mehrere radial verlaufende Tragscheiben auf, die von Messern überspannt werden. Die Messer sind auf einem Gestell aus Armen und einem diese verbindenden Messerbett gelagert. Vor den Armen und unterhalb des Betts verläuft ein konstant gekrümmtes Blech, das das Gut nach dem Trennvorgang erfaßt und bis zu einer Abgabestelle mitnimmt. Dieses Blech ist mit dem Gestell verschweißt und dient zugleich als Versteifung der gesamten Häckseltrommel. Ein weiterer Grund für derartige Bleche ist der, einen Eintritt des Guts in den Innenraum der Trommel zu vermeiden.

Auch die Häckseltrommel gemäß der DE-OS-1 507 278 weist Messerböcke mit einem konkav gekrümmten Schenkel auf, der einen tragenden Teil bildet und somit bei Verschleiß geschwächt wird.

Die unterschiedliche Ausbildung eines Schaufelteils in zwei Abschnitten macht es möglich, die entsprechenden Abschnitte ihrer Funktion nach auszubilden. Während ein erster Abschnitt im wesentlichen glatt und eben verläuft und somit zur flachen Anlage an einer Fläche geeignet ist, dient ein zweiter gekrümmter oder geknickter Abschnitt der Gutförderung.

Eine konstant gekrümmte Formgebung des Schaufelteils gewährleistet eine störungsfreie Bewegung des Guts ohne übermäßige Reibungsverluste. Anstatt eines streng bogenförmigen Verlaufs kann auch eine mehrfache Abkröpfung des Schaufelteils vorgenommen werden, wenn dies aus herstellungstechnischer Sicht Vorteile verspricht.

In der Zeichnung ist ein nachfolgend näher beschriebenes Ausführungsbeispiel der Erfindung dargestellt. Es zeigt:
- Figur 1: einen Häcksler mit einer erfindungsgemäßen Häckseltrommel in Seitenansicht,
- Figur 2: die Häckseltrommel in Vorderansicht,
- Figur 3: einen Bereich der Häckseltrommel in vergrößerter Darstellung mit einer ersten Ausbildung eines Schaufelteils und
- Figur 4: einen Bereich der Häckseltrommel in vergrößerter Darstellung mit einer zweiten Ausbildung des Schaufelteils.

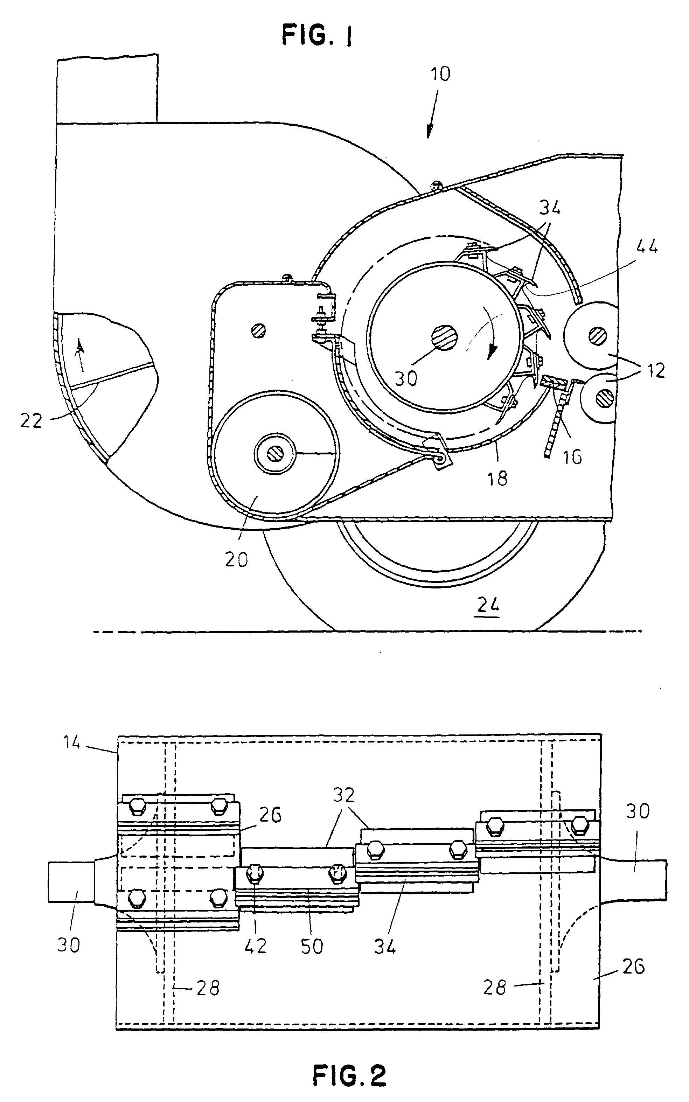

Ein in Figur 1 gezeigter Häcksler 10 enthält Einzugswalzen 12, eine erfindungsgemäße Häckseltrommel 14, eine Gegenschneide 16, einen Schneidboden 18, einen Förderer 20 und ein Gebläse 22.

Der Häcksler 10 ist als gezogener Häcksler ausgebildet und stützt sich auf dem Boden über Räder 24 ab, von denen nur eins gezeigt ist. Bei dem Häcksler 10 handelt es sich um einen landwirtschaftlichen Häcksler, der zur Ernte und Verarbeitung von Mais, Gras, Getreide und dergl. bestimmt ist; hierzu sind bestimmte, nicht gezeigte Erntebergungsvorsätze vorgesehen.

Die Einzugswalzen 12 verdichten das von der Erntebergungsvorrichtung kommende Gut zu einer Matte und geben es an die Häckseltrommel 14 weiter.

Die Häckseltrommel 14 weist eine geschlossene Trommel 26, Tragscheiben 28, Wellenstummel 30, Messerhalter 32, Messer 34 und Schaufelteile 36 auf.

Die Häckseltrommel 14 ist in geschlossener Bauweise ausgeführt und wird in der mit dem Pfeil gekennzeichneten Richtung angetrieben, um das von den Einzugswalzen 12 herangeführte Gut an der Gegenschneide 16 abzutrennen und es zunächst entlang dem Schneidboden 18 über den Förderer 20 dem Gebläse 22 zur Abgabe auf einen nebenherfahrenden Anhänger zu fördern.

Die Trommel 26 ist als rund-zylindrischer Körper in der Art eines Rohrs ausgebildet, der sich über die radial verlaufende Tragscheiben 28 auf den Wellenstummeln 30 abstützt. Die Wellenstummel 30 sind in nicht gezeigten Lagern in Seitenwänden des Häckslers 10 drehbar aufgenommen und mit Antriebselementen versehen.

Die Messerhalter 32 sind als Profilhalbzeuge ausgebildet, die im allgemeinen einen ersten Schenkel 38 und einen zweiten Schenkel 40 enthalten. Beide Schenkel 38, 40 gehen einenends einteilig ineinander über und sind anderenends auf die Trommel 26 aufgeschweißt.

Der erste Schenkel 38 verläuft im wesentlichen tangential zu der Trommel 26 und ist flach, so daß auf ihm ein Messer 34 mit Schrauben 42 befestigt werden kann. Der erste Schenkel 38 kann gerade oder gekröpft sein, was herkömmlich von der Anzahl auf dem Umfang zu verteilender Messerhalter 32 abhängt. Der erste Schenkel 38 ist mit Bohrungen versehen, durch die sich die Schrauben 42 erstrecken.

Der zweite Schenkel 40 verläuft zu dem ersten Schenkel 38 rechtwinklig oder nahezu rechtwinklig und hängt einer durch den Mittelpunkt der Trommel 26 verlaufenden Radialen nach. Der zweite Schenkel 40 ist einenends auf die Trommel 26 aufgeschweißt und endet anderenends unter dem Messer 34, wo er mit dem ersten Schenkel 38 zusammenfällt.

Jedes Messer 34, von denen auf dem Umfang der Trommel 26 in Reihen und versetzt zueinander z. B. 48 oder 54 Stück vorgesehen werden können, ist flach und nahezu rechteckig und mit nicht gezeigten sich nach hinten öffnenden Schlitzen oder mit Löchern versehen, durch die die Schrauben 42 ragen. Die Messer 34 erstrecken sich vorne, d. h. radial außenliegend, über den Messerhalter 32 hinaus und bilden einen Überstand 44. Die Messer 34 sind so angeordnet, daß sie mit dem geringstmöglichen Abstand an der Gegenschneide 16 vorbeigleiten.

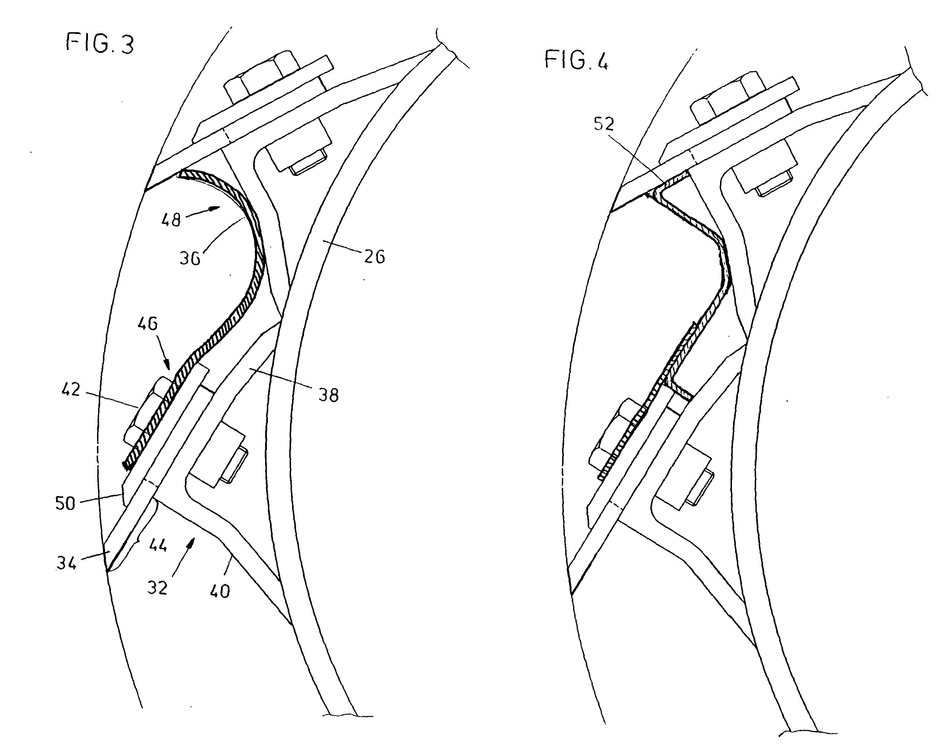

Die Schaufelteile 36 sind in den Figuren 3 und 4 näher dargestellt. Nach den dortigen Darstellungen ist jeder Schaufelteil 36 in einen ersten Abschnitt 46 und einen zweiten Abschnitt 48 unterteilt. Der Schaufelteil 36 ist aus einem mehrere Millimeter starken Blech gebildet, das entsprechend gepreßt, gezogen oder sonstwie geformt wird.

Der erste Abschnitt 46 ist mit dem Messer 34 auf dem Messerhalter 32, d. h. dessen erstem Schenkel 38, befestigt und im wesentlichen flach. Aus der vergrößerten Darstellung der Figuren 3 und 4 wird auch ersichtlich, daß zwischen dem Kopf der Schraube 42 und dem Messer 34 eine Platte 50 eingefügt ist, die die Klemmkräfte gleichmäßig auf das Messer 34 verteilt. Der Schaufelteil 36 wird im Bereich seines ersten Abschnitts 46 zwischen den Kopf der Schrauben 42 und die Platte 50 geklemmt. Zur Aufnahme der Schrauben 42 ist der Schaufelteil 36 mit jeweils nicht gezeigten Löchern oder Schlitzen versehen. Alternativ kann der erste Abschnitt 46 auch zwischen der Platte 50 und dem Messer 34 oder zwischen dem Messer 34 und dem ersten Schenkel 38 vorgesehen werden.

Der zweite Abschnitt 48, der nach Figur 3 mit dem ersten Abschnitt 46 einteilig und nach Figur 4 an den ersten Abschnitt 46 angeschlossen - z. B. geschweißt, gelötet, genietet - ist, verläuft gekrümmt, gekröpft oder abgewinkelt. Bei der Ausführung nach Figur 3 verläuft die Krümmung unter einem mehr oder weniger konstanten Radius und liegt sowohl an dem zweiten Schenkel 40 des nachfolgenden Messerhalters 32 als auch an der Unterseite des von ihm gehaltenen Messers 34 an. Somit werden Taschen in den Eckbereichen des zweiten Schenkels 40 vermieden und in Radien umgewandelt, die einen einwandfreien Abflug des Guts ermöglichen.

Bei der Ausführung nach Figur 4 verläuft der zweite Abschnitt nicht auf einem Bogen, sondern mehrfach geknickt und deckt ebenfalls die Eckbereiche des zweiten Schenkels 40 ab, so daß sich dort kein geschnittenes Gut ansammeln kann. An dem Schaufelteil 36 nach Figur 4 ist endseitig ein Rand 52 angeformt, der den Schaufelteil 36 an der Unterseite des Messers 34 abstützt und stabilisiert.

## Patentansprüche

1. Häckseltrommel (12) mit einer geschlossenen Trommel (26), mit auf die Trommel (26) aufgesetzten Messerhaltern (32) und mit Messern (34), wobei die Messerhalter (32) einen das Messer (34) tragenden ersten Schenkel (38) und einen sich von der Trommel (26) bis unter das Messer (34) erstreckenden zweiten Schenkel (40) aufweisen, **gekennzeichnet durch** einen Schaufelteil (36), der mit dem Messer 34 festgelegt ist und sich von einem Messerhalter (32) bis vor den zweiten Schenkel (40) des in Drehrichtung folgenden Messerhalters (32) erstreckt.

2. Häckseltrommel nach Anspruch 1, **dadurch gekennzeichnet, daß** der Schaufelteil (36) einen ebenen mittel- oder unmittelbar auf dem Messer (34) oder dem ersten Schenkel (38) aufliegenden Abschnitt (46) und einen zweiten gekrümmten Abschnitt (48) aufweist.

3. Häckseltrommel nach Anspruch 2, **dadurch gekennzeichnet, daß** der gekrümmte Abschnitt (48) unter einem konstanten Radius verläuft.

4. Häckseltrommel nach Anspruch 2, **dadurch gekennzeichnet, daß** der gekrümmte Abschnitt (48) mehrfach gekröpft ist.

## Claims

1. A chopper drum (12) with a closed drum (26), knife holders (32) fitted on the drum and knives (34), wherein the knife holders (32) have a first limb (38) carrying the knife (34) and second limb (40) extending from the drum (12) to below the knife (34), **characterized by** a scoop part (36) which is fixed to the knife (34) and extends from one knife holder (32) up to in front of the second limb (40) of the knife holder (32) which follows in the direction of rotation.

2. A chopper drum according to claim 1, **characterized in that** the scoop part (36) has a flat section (46) lying indirectly or directly on the knife (34) or the first limb (38) and a second curved section (48).

3. A chopper drum according to claim 2, **characterized in that** the curved section (48) runs with a constant radius.

4. A chopper drum according to claim 2, **characterized in that** the curved section (48) is bent several times.

## Revendications

1. Tambour hacheur (12) comportant un tambour fermé (26), des porte-couteaux (32) montés sur le tambour (26), et des couteaux (34), dans lequel les porte-couteaux (32) comportent une première branche (38), qui porte le couteau (34), et une seconde branche (40), qui s'étend à partir du tambour (26) jusqu'au-dessous du couteau (34), **caractérisé par** une pièce formant aube (36), qui est fixée au couteau (34) et s'étend depuis un porte-couteau (32) jusque devant la seconde branche (40) du porte-couteau (32) suivant dans le sens de rotation.

2. Tambour hacheur selon la revendication 1, **caractérisé en ce que** la pièce formant aube (36) possède une partie (46), qui s'applique indirectement ou directement sur le couteau (34) ou sur la première branche (38), et une seconde partie cintrée (48).

3. Tambour hacheur selon la revendication 2, **caractérisé en ce que** la partie cintrée (48) possède un rayon constant.

4. Tambour hacheur selon la revendication 2, **caractérisé en ce que** la partie cintrée (48) est cintrée et coudée de façon multiple.
